# EUROPÄISCHE PATENTSCHRIFT

(11) **EP 1 360 656 B1**
(45) Veröffentlichungstag und Bekanntmachung des Hinweises auf die Patenterteilung: **11.04.2007**
(21) Anmeldenummer: 01993912.3
(22) Anmeldetag: 07.11.2001
(51) Int. Cl.: G07F 7/00

(54) **EINHEIT FÜR BEHÄLTER-RÜCKNAHMEAUTOMATEN**
UNIT FOR AUTOMATIC CONTAINER RETURNS SYSTEMS
UNITE DESTINEE A DES SYSTEMES AUTOMATIQUES DE REPRISE DE CONTENANTS

(30) Priorität: 07.11.2000 DE 10055206; 07.11.2000 DE 10055208
(43) Veröffentlichungstag der Anmeldung: 12.11.2003
(73) Patentinhaber: Wincor Nixdorf International GmbH, 33106 Paderborn (DE)
(72) Erfinder: KRULL, Hans-Peter, 32312 Lübbecke (DE); HECHT, Siegmar, 98693 Ilmenau (DE); BEYER, Dieter, 98701 Friedersdorf (DE)
(86) Internationale Anmeldenummer: PCT/DE2001/004142
(87) Internationale Veröffentlichungsnummer: WO 2002/039393

(56) Entgegenhaltungen:
- EP-A- 0 612 046
- WO-A-98/02853
- GB-A- 2 129 572
- US-A- 5 361 913

## Beschreibung

Die Erfindung bezieht sich auf eine Einheit für Rücknahmeautomaten von Behältern, z.B. von Dosen und Flaschen aus Glas, Kunststoff oder Metall, wobei die Behälter mit Hilfe einer Fördervorrichtung in liegender Position zu einer Identifizierungsstation transportiert werden, in der charakteristische Daten der Behälter erfaßt werden und bestimmt wird, in welcher Weise die Behälter weiterbehandelt werden sollen, z.B. ob sie für die Entfernung von der Fördervorrichtung aussortiert oder gegebenenfalls zu einer weiteren Einheit weiterbefördert werden sollen.

Aus WO 98/02853 ist eine Einheit für Behälter-Rücknahmeautomaten bekannt, bei der die Fördervorrichtung aus einer Gruppe von parallel zwischen zwei Rollen gespannten Riemen besteht, die im Querschnitt eine Diabolo-Form bilden, so daß auf der Oberseite der Riemengruppe eine V-förmige Konfiguration gebildet wird, in der der zu befördernde Behälter seine Aufnahme findet. Längs des Förderwegs ist auf beiden Seiten je eine sich etwa über die Länge des Förderweges erstreckende Walze angeordnet, wobei die Walzen jeweils am Ende eines schwenkbaren Hebels angeordnet sind. Die Walzen sind mit einem sie in Drehung versetzenden Antrieb ausgerüstet, und durch Schwenkbewegung aufeinander zu kommen sie an der Identifizierungsstation mit dem Behälter in Berührung und heben diesen an, wobei der Behälter gleichzeitig in Drehung versetzt wird, so daß auf seiner Außenseite befindliche spezifische Daten, z.B in Form eines Bar-Codes, die sich mitdrehen, von einer Erkennungseinheit dedektiert werden können, auch wenn sie zuvor nicht im 'Blickfeld' der Erkennungseinheit lagen. Dabei wird in Abhängigkeit von dem Ergebnis der Identifizierung entschieden, was weiter mit dem Behälter geschehen soll, z.B. ob er seitlich von der Fördervorrichtung aussortiert werden soll, oder ob er weiter zur nächsten Einheit transportiert werden soll, um dort kompaktiert oder anderweitig behandelt zu werden. Bei der bekannten Einheit ist für die seitliche Aussortierung oberhalb der Fördervorrichtung ein durch einen motorischen Antrieb schwenkbarer Mechanismus vorgesehen, der den auf der Fördervorrichtung transportierten Behälter umgreift und diesen im Bedarfsfall durch seine Schwenkbewegung zur einen oder anderen Seite von der Fördervorrichtung herunterstößt.

Das Dokument EP-612046 offenbart die Merkmale vom Oberbegriff von Anspruch 1.

Die Erfindung geht aus von einer Einheit für Behälter-Rücknahmeautomaten, mit einer Fördervorrichtung zum Transport der Behälter in Richtung ihrer Längsachse, mit zwei längs des Förderweges angeordneten, durch einen Drehantrieb antreibbaren Walzen, die aus einer neutralen Position in eine Identifizierungsposition überführbar sind, in der sie den Behälter außer Eingriff mit der Fördervorrichtung bringen und ihn in Drehung versetzen, und mit Sortiermitteln zum selektiven seitlichen Abführen des Behälters von der Fördervorrichtung in Abhängigkeit von der Identifizierung.

Der Erfindung liegt die Aufgabe zugrunde, eine gattungsgemäße Einheit für Behälter-Rücknahmeautomaten aufzuzeigen, die sich durch einen einfachen Aufbau auszeichnet.

Die gestellte Aufgabe wird gemäß der Erfindung bei der gattungsgemäßen Einheit dadurch gelöst, dass die beiden Walzen als Sortiermittel dienen, in dem sie quer zum Förderweg in eine Sortierposition überführbar sind, in der der seitliche Abstand der einen bzw. anderen Walze vom Förderweg so groß ist, dass der Behälter zwischen dem Förderweg und der jeweils seitlich verschobenen Walze herunterfallen kann.

Die erfindungsgemäße Einheit hat den Vorteil, dass keine gesonderte, mit einem Antrieb versehene Sortiervorrichtung benötigt wird, weil die für die Identifizierungsfunktion vorgesehenen Walzen zugleich die Sortierfunktion übernehmen.

Anspruch 1 offenbart die Erfindung. Ansprüche 2-10 offenbaren bevorzugte Ausführungsbeispiele.

In vorteilhafter Ausgestaltung der Erfindung ist vorgesehen, dass die Fördervorrichtung aus zwei endlosen Förderbändern besteht, von denen jedes mit einer der Walzen ein gemeinsames Element bildet, dass die Förderbänder in der neutralen Position der Walzen zugleich als seitliche Führungen für den auf ihnen transportierten Behälter dienen, und dass die aus Walze und Transportband bestehenden Elemente in die Sortierposition überführbar sind.

Dabei ist vorgesehen, dass jedes der Förderbänder über in einem Rahmen gelagerte Umlenkrollen verläuft, dass der Rahmen auf der Achse der zugehörigen Walze drehbar gelagert ist, und dass der Drehantrieb für die Walzen aus einer zwischen ihnen angeordneten angetriebenen Welle besteht, an der die Walzen unter Vorspannung anliegen. Diese Anordnung hat den Vorteil, dass in den Walzen selbst keine Antriebsmittel vorgesehen werden müssen.

Zweckmäßigerweise verlaufen die Förderbänder über jeweils vier an den Ecken eines Rechtecks angeordnete Umlenkrollen, deren Abstände zueinander so bemessen sind, dass die zugehörige Walze jeweils in den von dem Förderband umschlossenen Raum um ein vorgegebenes Maß seitlich hineinragen kann. In weiterer vorteilhafter Ausgestaltung dieser Ausführungsform der Erfindung ist vorgesehen, dass die Träger für die Transportbänder aus der neutralen Position, in der die Transportbänder eine V-förmige Rinne zur Aufnahme des Behälters bilden, um die Achsen der Walzen gegensinnig in die Identifizierungsposition so weit drehbar sind, dass der Behälter von den Transportbändern freikommt und auf die rotierenden Walzen gelangt, und dass die aus Walze und Förderband bestehenden Elemente voneinander fort in die Sortierposition bewegbar sind.

In einer weiteren vorteilhaften Ausgestaltung der Erfindung ist vorgesehen, dass die Fördervorrichtung aus einem schmalen endlosen Förderband besteht, wobei die Walzen in der neutralen Position als seitliche Führungen des auf dem schmalen Förderband transportierten Behälters dienen.

In praktischer Ausgestaltung der Erfindung ist vorgesehen, dass zwischen dem oberen Trum des Förderbandes und dessen unterem Trum eine angetriebene, in Förderrichtung verlaufende Welle angeordnet ist, und dass die Walzen am freien Ende von schwenkbaren Hebeln angeordnet sind, durch deren Schwenkbewegung die Walzen aus der neutralen Position entweder in die Identifizierungsposition aufeinander zu bewegbar sind, in der sie mit der angetriebenen Welle in Wirkverbindung gelangen und den Behälter vom Förderband abheben und in Drehung versetzen, oder von dem Förderband weg in die Sortierposition bewegbar sind.

Diese Anordnung hat den Vorteil, dass die an den Hebeln angeordneten Walzen keinen eigenen Antrieb benötigen.

In vorteilhafter Ausgestaltung der Erfindung sind Mittel vorgesehen, die die die Walzen tragenden Hebel in Richtung auf die angetriebene Welle vorspannen, und auslösbare Sperrmittel, die die Hebel gegen die Kraft der Vorspannungsmittel in einer neutralen Position halten.

Vorzugsweise sind den die Walzen tragenden Hebeln Antriebsmittel zugeordnet, durch die die Hebel selektiv gegen die Kraft der Vorspannungsmittel in die Sortierposition ausschwenkbar sind. Die Antriebsmittel können dabei aus Motoren oder Drehmagneten bestehen.

Die Erfindung wird nachfolgend anhand von in der Zeichnung dargestellten Ausführungsbeispielen näher erläutert. In der dazugehörigen Zeichnung stellen dar:
- Fig. 1: schematisch eine Stirnansicht der Antriebsmittel der Einheit in der neutralen Position für den Transport des Behälters in einer ersten Ausführungsform der Erfindung;
- Fig. 2: die Anordnung von Fig. 1 in der Identifizierungsposition;

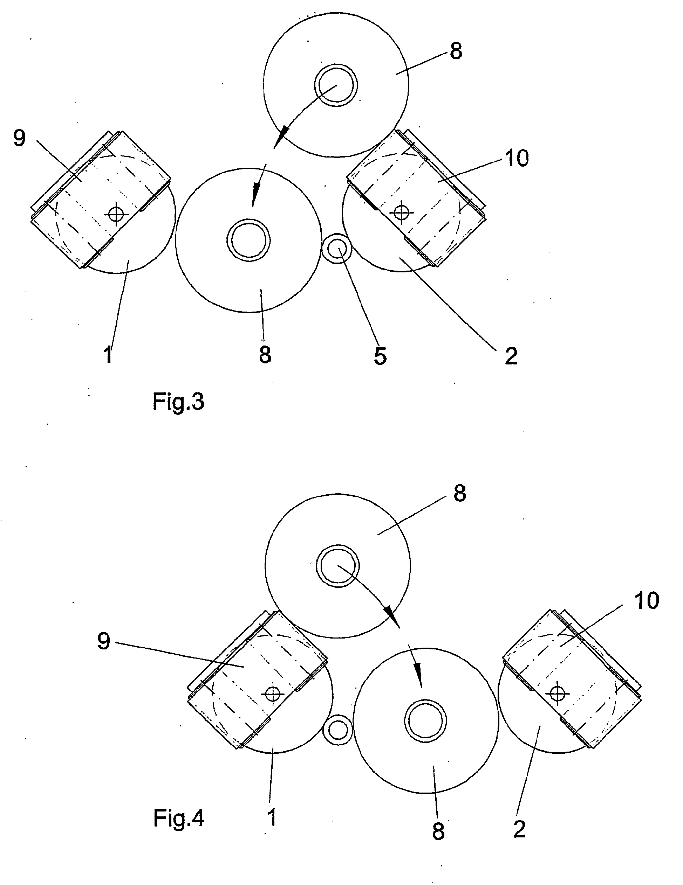

- Fig. 3: die Anordnung von Fig. 1 in der Sortierposition zum Abführen des Behälters nach links;
- Fig. 4: die Anordnung von Fig. 1 in der Sortierposition bei Abführung des Behälters nach rechts;
- Fig. 5: eine Seitenansicht der Antriebsvorrichtung der Einheit.
- Fig. 6: schematisch eine Stirnansicht des Verstellmechanismus einer erfindungsgemäßen Einheit für Behälter-Rücknahmeautomaten nach einer zweiten Ausführungsform der Erfindung;
- Fig. 7: schematisch eine perspektivische Ansicht der Anordnung von Fig. 6, und
- Fig. 8: schematisch eine perspektivische Ansicht einer Einheit mit dem Mechanismus von Fig. 6 und 7.

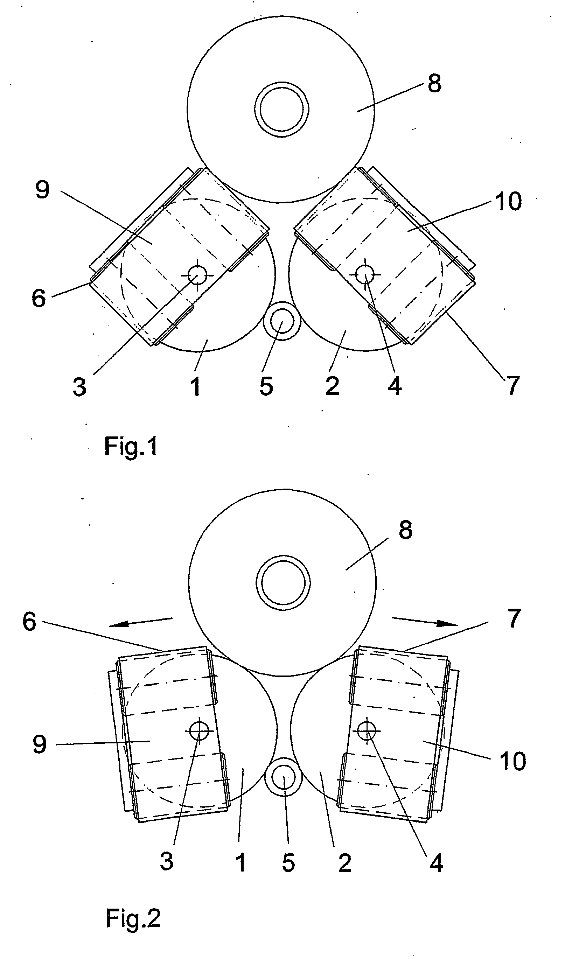

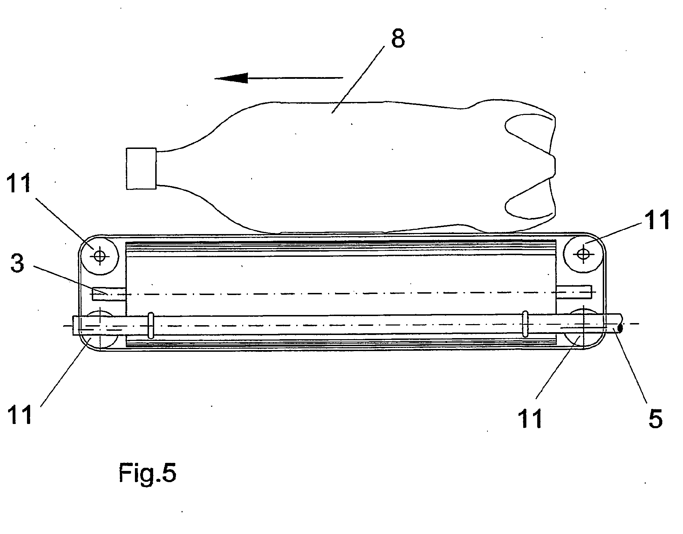

Fig. 1 zeigt in Stirnansicht zwei Walzen 1 und 2 einer erfindungsgemäßen Einheit für Behälter-Rücknahmeautomaten, die um Achsen 3 und 4 drehbar sind und durch eine angetriebene Welle 5, an der sie mit Vorspannung anliegen, nach Art eines Reibradantriebes in Drehung versetzt werden. Auf den Achsen 3 und 4 ist jeweils drehbar ein Rahmen 9 bzw. 10 gelagert, der ein System von vier Umlenkrollen 11 (Fig. 5) trägt, über die ein endloses Förderband 6 bzw. 7 läuft. Die Rahmen 9 und 10 bilden mit den Walzen 1 und 2, den Umlenkrollen 11 und den Förderbändern 6 und 7 jeweils ein gemeinsames Element. Nicht dargestellte Steuermittel halten die Walzen 1 und 2 in der in Fig. 1 dargestellten neutralen Position, in der die Förderbänder 6 und 7 über die Walzen 1 und 2 vorstehen und eine V-förmige Konfiguration bilden, in der ein zu befördernder Behälter 8 von ihnen seitlich geführt wird. Die vertikalen Abstände zwischen den vier Umlenkrollen 11 sind so bemessen, daß die zugehörige Walze 1 bzw. 2 in den von dem Förderband 6 bzw. 7 umschlossenen Raum um ein vorgegebenes Maß hineinragen kann. Dieses Maß beträgt bei dem dargestellten Ausführungsbeispiel etwas mehr als die Hälfte der Querschnittsfläche der Walze 1 bzw. 2. Hierdurch liegt ein Umfangsbereich der Walzen 1 bzw. 2 frei, der mit der Welle 5 in Eingriff ist.

Fig. 2 zeigt die Antriebsanordnung von Fig. 1 in der Identifizierungsposition. Hier haben sich die Rahmen 9 und 10 mit den Förderbändern 6 und 7 so weit gegensinnig um die Achsen 3 und 4 gedreht, dass die Förderbänder 6 und 7 von dem Behälter 8 freigekommen sind und der freiliegende Umfangsbereich der Walzen 1 und 2 mit dem Behälter 8 in Wirkverbindung gelangt. Hierdurch wird der Behälter 8 über die durch die angetriebene Welle 5 umlaufenden Walzen 1 und 2 in Drehung versetzt, so daß ein auf dem Behälter angebrachter Identifizierungs-Code, z.B. ein Bar-Code, von einer nicht dargestellten Leseeinrichtung oberhalb des Behälters 8 gelesen und ausgewertet werden kann.

Wenn in der Identifizierungsstation festgestellt wird, dass der Behälter rücknahmefähig ist, nimmt die Anordnung von Fig. 2 wieder die Position von Fig. 1 ein, und der Behälter wird zur nächsten Station weitergeleitet.

Hat die Identifizierungsstation jedoch festgestellt, dass es sich um keine Pfandflasche handelt, wird die rechte oder linke Walze 1 bzw. 2 mit dem Rahmen 9 bzw. 10, den Förderbändern 6 bzw. 7 und den Umlenkrollen 11 jeweils als Einheit so weit nach außen bewegt, dass zwischen der Walze 1 bzw. 2 und der angetriebenen Welle 5 ein so großer Abstand gebildet wird, dass der Behälter 8 zur linken oder rechten Seite herunterfallen kann und damit von der Fördervorrichtung aussortiert wird.

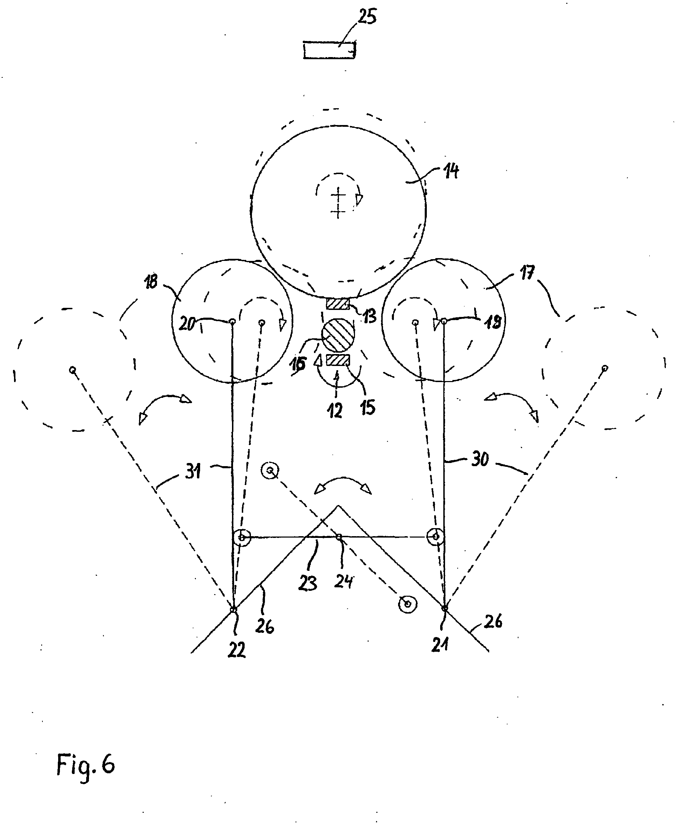

In den Figuren 6 bis 8 ist eine weitere Ausführungsform der Erfindung dargestellt.

Fig. 6 zeigt ein schmales endloses Förderband 12, das in einem ansonsten nicht dargestellten Rücknahmeautomaten für leere Getränkebehältnisse angeordnet ist. Auf dem oberen Trum 13 des Förderbandes 12 werden Behälter 14, z. B. leere Flaschen oder Dosen, senkrecht zur Papierebene befördert. In dem Zwischenraum zwischen dem oberen Trum 13 und dem unteren Trum 15 des Förderbandes 12 befindet sich eine antreibbare Welle 16, deren Achse in Förderrichtung verläuft. Auf jeder Seite des Förderbandes 12 ist eine Walze 17 bzw. 18 vorgesehen. Die Drehachsen 19, 20 der Walzen 17 und 18 verlaufen ebenfalls in Förderrichtung und haben vorzugsweise eine größere Länge als die transportierten Behälter 14. Die Rollen 17 und 18 sind bei dem dargestellten Ausführungsbeispiel am freien Ende von Hebeln 30 bzw. 31 drehbar gelagert, deren andere Enden schwenkbar über Gelenke 21 bzw. 22 am Gehäuse der Einheit angelenkt sind.

Wenn auf dem Förderband 12 ein Behälter 14 transportiert wird, befinden sich die Walzen 17 und 18 in der voll ausgezogenen neutralen Lage, in der sie sich nicht um ihre Achsen 19, 20 drehen, und in der sie ein seitliches Abkippen des Behälters 14 von dem Förderband 12 verhindern. Auf die Hebel 30 und 31 wirken nicht dargestellte Vorspannmittel, z. B. Federn, ein, die bestrebt sind, die Walzen 17 und 18 aufeinander zu zubewegen. Hieran werden sie durch verstellbare Anschlagmittel gehindert. Die Anschlagmittel bestehen bei dem dargestellten Ausführungsbeispiel aus einem um eine mittlere Achse 24 drehbaren Hebel 23.

Wenn der Behälter 14 die Identifizierungsposition erreicht hat, wird der Hebel 23 um die Achse 24 in die gestrichelte Position gedreht, so dass die Hebel 30 und 31 unter der Wirkung der Vorspannung aufeinander zu schwenken, bis sie die gestrichelt dargestellte Position erreichen, in der sie an der angetriebenen Welle 16 anliegen, wobei sie gleichzeitig mit dem Behälter 14 in Berührung kommen und diesen in die gestrichelte Position anheben, so dass dieser von dem Förderband 12 freikommt und auf den Walzen 17 und 18 ruht, die nun ihre von der Welle 16 nach Art eines Reibradantriebes mitgeteilte Drehung an den Behälter 14 weitergeben. Bei dieser Drehbewegung des Behälters 14 wird eine sich oberhalb von diesem befindliche Ablesevorrichtung 25, z. B. ein Bar-Code-Laser aktiviert, der einen außen auf dem Behälter 14 angebrachten Bar-Code oder andere Kennzeichnungsmittel erfaßt, die spezifische Daten des Behälters 14 beinhalten, z. B. ob es sich um eine Flasche aus Kunststoff oder Glas oder um ein Blechdose handelt, ob der Behälter 14 recycelbar ist usw. Eine an die Ablesevorrichtung 25 angeschlossene Auswerteeinheit bestimmt dann, was weiter mit dem Behälter 14 geschehen soll, z. B. ob er zurück an die Eingabeposition oder weiter auf eine nächste Fördereinheit transportiert werden soll, oder ob er bereits in der Identifizierungsposition aussortiert werden soll.

Wenn die Entscheidung der an die Ablesevorrichtung 25 angeschlossenen Auswerteeinheit zu der Entscheidung führt, daß eine Aussortierung erfolgen soll, wird entweder der Hebel 30 oder der Hebel 31 von der Welle 16 weg in die gestrichelte Sortierposition geschwenkt, so dass zwischen dem Förderband 12 und der jeweils nach außen geschwenkten Wälze 17 bzw. 18 ein so großer Zwischenraum gebildet wird, dass der Behälter 14 nach rechts bzw. links herunterfallen kann, wo er auf eine Leitvorrichtung 26 trifft, von der er einem Ablagebehälter oder einer sonstigen Bearbeitung zugeführt wird. Zum Antrieb der Hebel 30, 31 in ihre Sortierposition sind nicht dargestellte Drehmagneten vorgesehen.

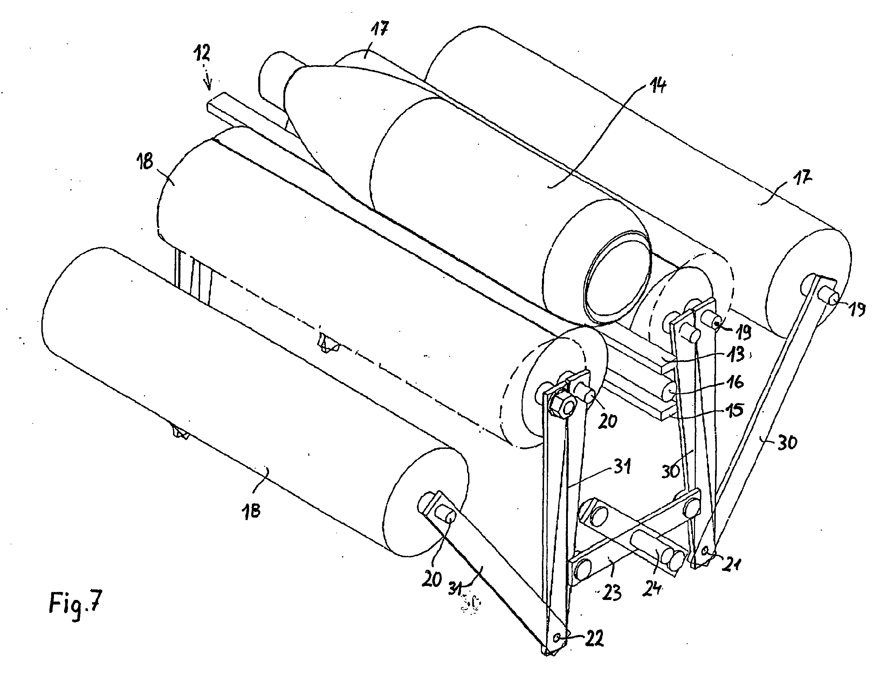

Fig. 7 zeigt die in Fig. 6 dargestellte Vorrichtung in perspektivischer Ansicht, wobei dort ebenfalls die drei möglichen Positionen der Walzen 17 und 18 dargestellt sind.

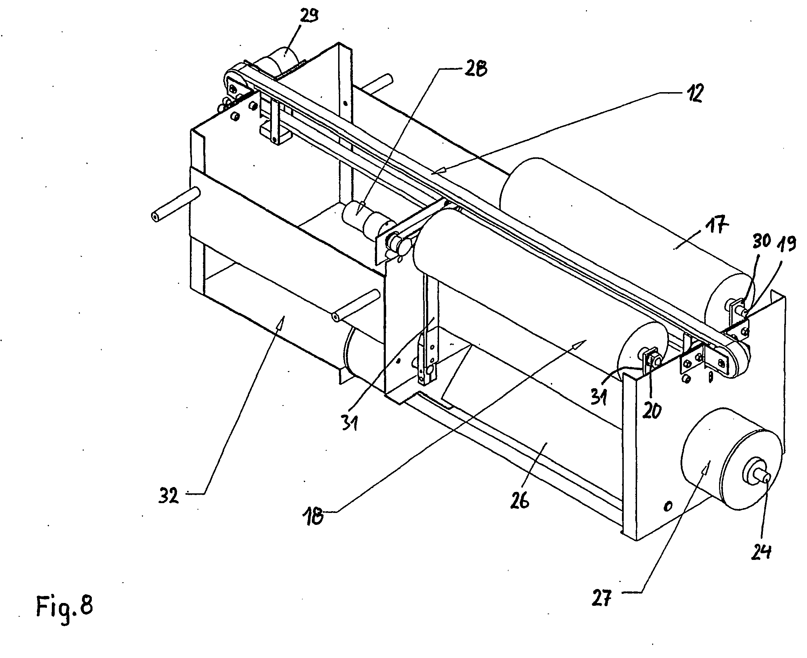

Fig. 8 zeigt schematische Teile der Einheit 32 mit dem in Fig. 6 und 7 dargestellten Antriebsmechanismus. Die Schwenkbewegung der Hebel 30 und 31 wird hier durch einen Drehmagneten 27 bewirkt. Es sind ferner Antriebsmittel 28 für die in dieser Darstellung nicht sichtbare Welle 16 und Antriebsmittel 29 für das Förderband 12 angedeutet.

## Patentansprüche

1. Einheit für Behälter-Rücknahmeautomaten, mit einer Fördervorrichtung zum Transport der Behälter in Richtung ihrer Längsachse, mit zwei längs des Förderweges angeordneten, durch einen Drehantrieb antreibbaren Walzen, die aus einer neutralen Position in eine Identifizierungsposition überführbar sind; in der sie den Behälter außer Eingriff mit der Fördervorrichtung bringen und ihn in Drehung versetzen, und mit Sortiermitteln zum selektiven seitlichen Abführen des Behälters von der Fördervorrichtung in Abhängigkeit von der Identifizierung, **dadurch gekennzeichnet, dass** die beiden Walzen (1, 2;17, 18) als Sortiermittel dienen, in dem sie quer zum Förderweg in eine Sortierposition überführbar sind, in der der seitliche Abstand der einen oder anderen Walze (1, 2;17, 18) vom Förderweg so groß ist, dass der Behälter (8, 14) zwischen dem Förderweg und der jeweils seitlich verschobenen Walze (1, 2;17, 18) herunterfallen kann.

2. Einheit nach Anspruch 1, **dadurch gekennzeichnet, dass** die Fördervorrichtung aus zwei endlosen Förderbändern (6, 7) besteht, von denen jedes mit einer der Walzen (1, 2) ein gemeinsames Element bildet, dass die Förderbänder (6, 7) in der neutralen Position der Walzen (1, 2) zugleich als seitliche Führungen für den auf ihnen transportierten Behälter (8) dienen, und dass die aus den Walzen (1, 2) und den Förderbändern (6, 7) bestehenden Elemente in die Sortierposition überführbar sind.

3. Einheit nach Anspruch 2, **dadurch gekennzeichnet, dass** jedes der Förderbänder (6, 7) über in einem Rahmen (9, 10) gelagerte Umlenkrollen (11) verläuft, dass der Rahmen (9, 10) auf der Achse (3, 4) der zugehörigen Walze (1, 2) drehbar gelagert ist, und dass der Drehantrieb für die Walzen (1, 2) aus einer zwischen ihnen angeordneten angetriebenen Welle (5) besteht, an der die Walzen (1, 2) unter Vorspannung anliegen.

4. Einheit nach Anspruch 3, **dadurch gekennzeichnet, dass** die Förderbänder (6, 7) über jeweils vier an den Ecken eines Rechtecks angeordnete Umlenkrollen (11) verlaufen, deren Abstände zueinander so bemessen sind, dass die zugehörige Walze (1, 2) jeweils in den von dem Förderband (6, 7) umschlossenen Raum um ein vorgegebenes Maß hineinragen kann.

5. Einheit nach Anspruch 4, **dadurch gekennzeichnet, dass** die Rahmen (9, 10) für die Förderbänder (6, 7) aus der neutralen Position, in der die Förderbänder (6, 7) eine V-förmige Rinne zur Aufnahme des Behälters (8) bilden, um die Achsen (3, 4) der Walzen (1, 2) gegensinnig in die Identifizierungsposition so weit drehbar sind, dass der Behälter (8) von den Förderbändern freikommt und auf die rotierenden Walzen (1, 2) gelangt, und dass die aus Walze (1, 2) und Förderband (3, 4) bestehenden Elemente voneinander fort in die Sortierposition bewegbar sind.

6. Einheit nach Anspruch 1, **dadurch gekennzeichnet, dass** die Fördervorrichtung aus einem schmalen endlosen Förderband (12) besteht, wobei die Walzen (17, 18) in der neutralen Position als seitliche Führungen des auf dem schmalen Förderband (12) transportierten Behälters (14) dienen.

7. Einheit nach Anspruch 6, **dadurch gekennzeichnet, dass** zwischen dem oberen Trum (13) des Förderbandes (12) und dessen unteren Trum (15) eine angetriebene, in Förderrichtung verlaufende Welle (16) angeordnet ist, und dass die Walzen (17, 18) am freien Ende von schwenkbaren Hebeln (30, 31) angeordnet sind, durch deren Schwenkbewegung die Walzen (17, 18) aus der neutralen Position entweder in die Identifizierungsposition aufeinander zu bewegbar sind, in der sie mit der angetriebenen Welle (16) in Wirkverbindung gelangen und den Behälter (14) vom Förderband (12) abheben und in Drehung versetzen, oder von dem Förderband (12) fort in die Sortierposition bewegbar sind.

8. Einheit nach Anspruch 7, **dadurch gekennzeichnet, dass** Mittel vorgesehen sind, die die die Walzen (17,18) tragenden Hebel (30, 31) in Richtung auf die angetriebene Welle (16) vorspannen, dass verstellbare Sperrmittel (23) vorgesehen sind, die die Hebel (30, 31) gegen die Kraft der Vorspannmittel in der neutralen Position halten.

9. Einheit nach Anspruch 7 oder 8, **dadurch gekennzeichnet, dass** den die Walzen (17, 18) tragenden Hebeln (30, 31) Antriebsmittel zugeordnet sind, durch die die Hebel (30, 31) selektiv gegen die Kraft der Vorspannmittel in die Sortierposition ausschwenkbar sind.

10. Einheit nach Anspruch 9, **dadurch gekennzeichnet, dass** die Antriebsmittel aus motorbetriebenen Riementrieben oder Drehmagneten bestehen.

## Claims

1. Unit for automatic container recycling machines, having a conveying device for transporting the containers in the direction of its longitudinal axis, having two rollers, which are disposed along the conveying path and can be driven by a rotary drive and which can be transferred out of a neutral position into an identification position in which they disengage the container from the conveying device and set it in rotation, and having sorting means for the selective lateral evacuation of the container from the conveying device in dependence on the identification, **characterized in that** the two rollers (1, 2; 17, 18) serve as sorting means, since they are transferable transversely to the conveying path into a sorting position in which the lateral distance of the one or other roller (1, 2; 17, 18) from the conveying path is sufficiently large to enable the container (8, 14) to drop down between the conveying path and the respectively laterally displaced roller (1, 2; 17, 18).

2. Unit according to Claim 1, **characterized in that** the conveying device consists of two continuous conveyor belts (6, 7), each of which forms with one of the rollers (1, 2) a common element, **in that** the conveyor belts (6, 7), in the neutral position of the rollers (1, 2), simultaneously serve as lateral guides for the container (8) transported thereon, and **in that** the elements consisting of the rollers (1, 2) and the conveyor belts (6, 7) are transferable into the sorting position.

3. Unit according to Claim 2, **characterized in that** each of the conveyor belts (6, 7) runs via deflection pulleys (11) mounted in a frame (9, 10), **in that** the frame (9, 10) is rotatably mounted on the axle (3, 4) of the associated roller (1, 2), and **in that** the rotary drive for the rollers (1, 2) consists of a driven shaft (5) which is disposed between them and against which the rollers (1, 2) bear under pretension.

4. Unit according to Claim 3, **characterized in that** the conveyor belts (6, 7) run via respectively four deflection pulleys (11) disposed at the corners of a rectangle, the distances between which are dimensioned such that the associated roller (1, 2) can respectively jut by a predefined measure into the space enclosed by the conveyor belt (6, 7).

5. Unit according to Claim 4, **characterized in that** the frames (9, 10) for the conveyor belts (6, 7) can be rotated out of the neutral position, in which the conveyor belts (6, 7) form a V-shaped channel for the reception of the container (8), in opposite directions about the axles (3, 4) of the rollers (1, 2) into the identification position to the point where the container (8) is set free from the conveyor belt and makes its way onto the rotating rollers (1, 2), and **in that** the elements consisting of roller (1, 2) and conveyor belt (3, 4) can be moved away from one another into the sorting position.

6. Unit according to Claim 1, **characterized in that** the conveying device consists of a narrow continuous conveyor belt (12), the rollers (17, 18), in the neutral position, serving as lateral guides for the container (14) transported in the narrow conveyor belt (12).

7. Unit according to Claim 6, **characterized in that** between the upper strand (13) of the conveyor belt (12) and its lower strand (15) there is disposed a driven shaft (16) running in the direction of conveyance, and **in that** the rollers (17, 18) are disposed at the free end of pivotable levers (30, 31), by whose pivot motion the rollers (17, 18) can be moved out of the neutral position either closer together into the identification position, in which they enter into operative connection with the driven shaft (16) and lift the container (14) off the conveyor belt (12) and set it in rotation, or away from the conveyor belt (12) into the sorting position.

8. Unit according to Claim 7, **characterized in that** means are provided which pretension the levers (30, 31) supporting the rollers (17, 18) in the direction of the driven shaft (16), **in that** adjustable locking means (23) are provided, which hold the levers (30, 31) in the neutral position counter to the force of the pretensioning means.

9. Unit according to Claim 7 or 8, **characterized in that** to the levers (30, 31) supporting the rollers (17, 18) drive means are assigned, by which the levers (30, 31) can be selectively pivoted into the sorting position counter to the force of the pretensioning means.

10. Unit according to Claim 9, **characterized in that** the drive means consist of motor-operated belt drives or rotary magnets.

## Revendications

1. Unité pour des automates de reprise de récipients, comprenant un dispositif convoyeur pour le transport des récipients dans la direction de son axe longitudinal, deux rouleaux qui sont disposés le long du trajet de convoyage, qui peuvent être entraînés par un dispositif d'entraînement en rotation et qui peuvent passer d'une position neutre à une position d'identification dans laquelle ils mettent le récipient hors de prise avec le dispositif convoyeur et le mettent en rotation, et des moyens de tri pour évacuer latéralement sélectivement le récipient du dispositif convoyeur en fonction de l'identification,
**caractérisée en ce que** les deux rouleaux (1, 2 ; 17, 18) servent de moyen de tri, dans lequel ils peuvent être mis transversalement au trajet de convoyage dans une position de tri dans laquelle la distance latérale de l'un ou de l'autre rouleau (1, 2 ; 17, 18) au trajet de convoyage est si grande que le récipient (8, 14) peut tomber entre le trajet de convoyage et le rouleau (1, 2 ; 17, 18) respectivement décalé latéralement.

2. Unité suivant la revendication 1, **caractérisée en ce que** le dispositif convoyeur est constitué de deux bandes (6, 7) convoyeuses sans fin, dont chacune forme avec l'un des rouleaux (1, 2) un élément commun, **en ce que** les bandes (6, 7) convoyeuses servent dans la position neutre des rouleaux (1, 2) en même temps de guidages latéraux des récipients (8) qui y sont transportés et **en ce que** les éléments constitués des rouleaux (1, 2) et des bandes (6, 7) convoyeuses peuvent être mis en la position de tri.

3. Unité suivant la revendication 2, **caractérisée en ce que** chacune des bandes (6, 7) convoyeuses passe sur des rouleaux (11) de renvoi montés dans un cadre (9, 10), **en ce que** le cadre (9, 10) est monté tournant sur l'axe (3, 4) du rouleau (1, 2) associé et **en ce que** le dispositif d'entraînement en rotation des rouleaux (1, 2) est constitué d'un arbre (5) mené qui est disposé entre eux et qui s'applique aux rouleaux (1, 2) sous tension préalable.

4. Unité suivant la revendication 3, **caractérisée en ce que** les bandes (6, 7) convoyeuses passent sur, respectivement, quatre rouleaux (11) de renvoi qui sont disposés aux sommets d'un rectangle et dont les distances mutuelles sont telles que le rouleau (1, 2) associé peut pénétrer dans une mesure prescrite, respectivement, dans l'espace entouré par la bande (6, 7) convoyeuse.

5. Unité suivant la revendication 4, **caractérisée en ce que** les cadres (9, 10) pour les bandes (6, 7) convoyeuses peuvent être tournés tellement autour des axes (3, 4) des rouleaux (1, 2) en sens inverse pour venir dans la position d'identification à partir de la position neutre dans laquelle les bandes (6, 7) convoyeuses forment une goulotte en forme de V de réception du récipient (8), que le récipient (8) se libère des bandes convoyeuses et arrive sur les rouleaux (1, 2) tournants, et **en ce que** les éléments constitués du cylindre (1, 2) et de la bande (3, 4) convoyeuse peuvent continuer à être éloignés l'un de l'autre pour venir en la position de tri.

6. Unité suivant la revendication 1, **caractérisée en ce que** le dispositif convoyeur est constitué d'une bande (12) convoyeuse sans fin et étroite, les rouleaux (17, 18) servant dans la position neutre de guidages latéraux du récipient (1) transporté sur la bande (12) convoyeuse étroite.

7. Unité suivant la revendication 6, **caractérisée en ce qu'**il est disposé entre le brin (13) supérieur de la bande (12) convoyeuse et son brin (15) inférieur, un arbre (16) mené et s'étendant dans la direction de convoyage et **en ce que** les rouleaux (17, 18) sont disposés à l'extrémité libre de leviers (30, 31) basculants par le mouvement de basculement desquels les rouleaux (17, 18) peuvent être déplacés l'un sur l'autre de la position neutre soit dans la position d'identification dans laquelle ils viennent coopérer avec l'arbre (16) mené et soulèvent le récipient (14) de la bande (12) transporteuse et le mettent en rotation, soit être éloignés de la bande (12) convoyeuse pour venir dans la position de tri.

8. Unité suivant la revendication 7, **caractérisée en ce qu'**il est prévu des moyens qui mettent les leviers (30, 31) portant les rouleaux (17, 18) sous tension préalable en direction de l'arbre (16) mené, **en ce qu'**il est prévu des moyens (23) réglables d'arrêt, qui maintiennent les leviers (30, 31) en la position neutre à l'encontre de la force des moyens de mise sous tension préalable.

9. Unité suivant la revendication 7 ou 8, **caractérisée en ce qu'**il est associé aux leviers (30, 31) portant les rouleaux (17, 18) des moyens d'entraînement, par lesquels les leviers (30, 31) peuvent être basculés sélectivement pour venir dans la position de tri à l'encontre de la force des moyens de mise sous tension préalable.

10. Unité suivant la revendication 9, **caractérisée en ce que** les moyens d'entraînement sont constitués de transmissions à courroies motorisées ou d'aimants tournants.
